# FASCICULE DE BREVET EUROPEEN

(11) **EP 0 967 424 B1**
(45) Date de publication et mention de la délivrance du brevet: **17.03.2004**
(21) Numéro de dépôt: 98202143.8
(22) Date de dépôt: 26.06.1998
(51) Int. Cl.: F16J 15/34

(54) **Dispositif de turbomachine avec un joint d'étanchéité**
Turbomachinenvorrichtung mit einer Dichtung
Turbomachine arrangement with a sealing arrangement

(43) Date de publication de la demande: 29.12.1999
(73) Titulaire: Techspace aero, 4041 Milmort - Herstal (BE)
(72) Inventeur: Tran, Hung Quac, 4020 Liège (BE); Pacchioni, Lorenzo, 4690 Roclenge/s/Geer (BE)
(74) Mandataire: Berrou, Paul

(56) Documents cités:
- US-A- 3 122 374
- US-A- 4 398 730
- US-A- 4 687 346

## Description

L'invention concerne un dispositif de turbomachine comprenant un arbre portant un manchon, un carter complété par un couvercle ainsi qu'un palier à roulement et un joint d'étanchéité. De manière courante, un palier de turbomachine supportant un arbre tournant à l'intérieur d'un carter fixe comporte un roulement disposé dans une enceinte où sa lubrification est assurée. Par contre, toute migration d'huile doit être évitée vers certains compartiments de la turbomachine et l'étanchéité doit ainsi être assurée à la séparation entre l'enceinte de palier contenant de l'huile et une enceinte voisine à l'air qui doit être maintenue exempte d'huile.

Diverses solutions ont été mises en oeuvre dans ce but. Des joints à labyrinthe ont ainsi été utilisés et présentent l'intérêt de leur simplicité de fabrication et d'une longue durée de vie. Toutefois il peuvent occasionner des fuites d'air importantes préjudiciables aux performances et les balourds de l'arbre peuvent entraîner des détériorations.

Il en résulte une augmentation des consommations d'huile entraînée par l'air vers les déshuileurs air-huile et des fuites d'huile restent possibles de l'enceinte à huile vers l'enceinte à l'air.

D'autres solutions utilisent des joints en carbone associés à divers modalités de mise en place. Notamment, EP-A-0 387 122 illustre un exemple de réalisation de joint radial segmenté et un autre exemple est montré par EP-A-0 562 895. On note que l'utilisation de joints avec contacts réduit largement les fuites d'air vers les enceintes à huile et en conséquence la consommation d'huile après le passage à travers un déshuileur. Cependant les répercussions des balourds de l'arbre ne sont pas maîtrisées et des usures résultent de frottements importants, ce qui limite les durées de vie de ces joints, fréquemment de l'ordre du millier d'heures et insuffisantes pour les applications visées par la présente invention.

La solution proposée par l'invention évite les divers inconvénients des solutions connues antérieures tout en assurant l'étanchéité recherchée entre une enceinte à air et une enceinte à huile. Le dispositif répondant à ces conditions est caractérisé en ce qu'il comprend un joint à labyrinthe monté sur la partie de manchon solidaire de l'arbre située du côté de l'enceinte à air et, en série, un anneau statique de carbone ne présentant pas de contact avec l'arbre et bloqué axialement sur un support annulaire fixe, ledit anneau de carbone ayant une face latérale coopérant avec un anneau tournant entraîné par le manchon au moyen de goupilles portées par le manchon, centré sans serrage sur le manchon solidaire de l'arbre en rotation au moyen d'un joint torique et maintenu dans le sens axial par un ressort plat annulaire, la face latérale dudit anneau tournant en contact avec l'anneau de carbone comportant des rainures de portance de manière à assurer une étanchéité en fonctionnement sans frottement entre lesdites faces latérales.

Ces dispositions remarquables selon l'invention permettent d'atteindre les buts recherchés. Notamment, la fuite d'air de l'enceinte à air vers l'enceinte à huile est très réduite, ce qui permet de contrôler la consommation d'huile et d'éviter une influence néfaste sur les performances. La fuite d'huile de l'enceinte à huile vers l'enceinte à air est évitée, ce qui permet de ne pas polluer l'air utilisé dans les prélèvements d'avion. En supprimant le frottement, les échauffements de joint sont évités et les détériorations et/ou usure qui en résultent. Les durées de vie de joints sont donc notablement allongées. En outre, le dispositif est insensible aux balourds qui peuvent apparaître sur l'arbre.

D'autres caractéristiques et avantages de l'invention seront mieux compris à la lecture de la description qui va suivre d'un mode de réalisation de l'invention, en référence aux dessins annexés sur lesquels :
- la figure 1 représente, selon une vue en coupe par un plan passant par l'axe de rotation de l'arbre, une partie de palier de turbomachine comportant un dispositif de joint d'étanchéité d'enceinte conforme à l'invention ;
- la figure 2 représente un détail agrandi de la figure 1 montrant le montage du joint d'étanchéité ;
- la figure 3 représente la partie statique du joint en anneau de carbone ;
- la figure 4 représente la partie dynamique du joint formée par un anneau tournant.

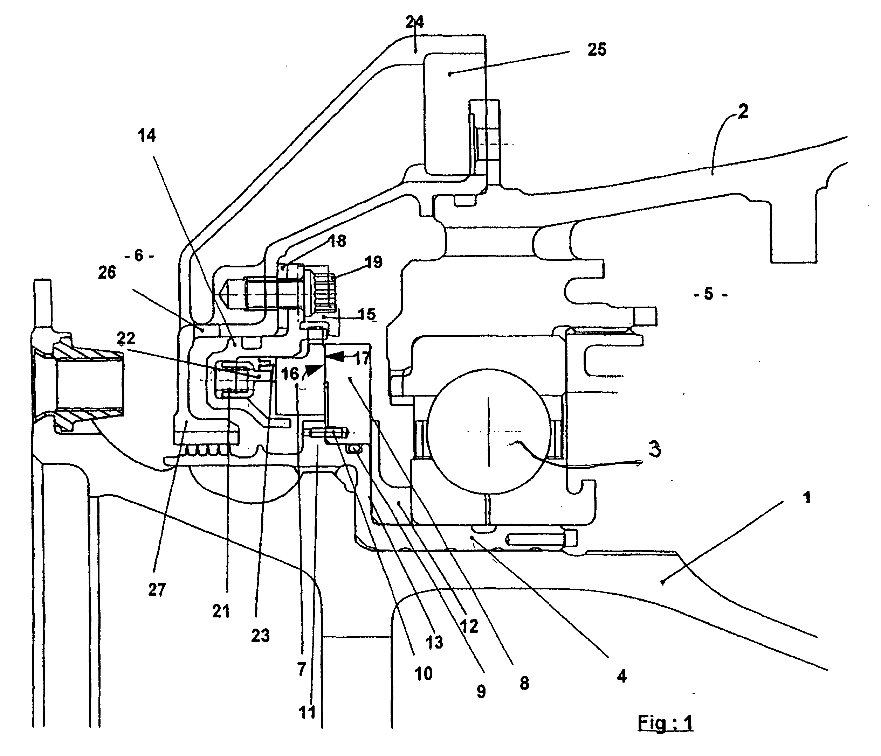

Suivant la représentation partielle donnée par la figure 1, un arbre 1 est supporté en rotation par un palier porté par un carter 2 et comportant un roulement 3, un manchon 4 solidarisé en rotation à l'arbre 1 est interposé entre le roulement 3 et l'arbre 1, suivant des dispositions connues en soi dans l'application aux turbomachines. Le roulement 3 est compris dans une enceinte 5 où sont présents à la fois de l'air et de l'huile du fait de la lubrification du roulement 3 assurée de manière connue en soi et qui n'a pas été représentée en détails sur les dessins. Dans l'application à une turbomachine visée par l'invention, au-delà du palier de support, l'arbre 1 est entouré d'une enceinte 6 dite à air et qui doit rester exempte d'huile car toute remontée d'huile dans certains compartiments de la turbomachine serait préjudiciable à un bon fonctionnement et notamment divers prélèvements d'air en servitudes d'avion sont effectués de manière connue en soi, exigeant l'utilisation d'un air propre et notamment exempt d'huile pour ne pas aggraver les problèmes de pressurisation et de filtration. Le dispositif d'étanchéité conforme à l'invention est ainsi disposé entre l'arbre 1 et le carter 2 de turbomachine, à la séparation entre l'enceinte à huile 5 et l'enceinte à air 6.

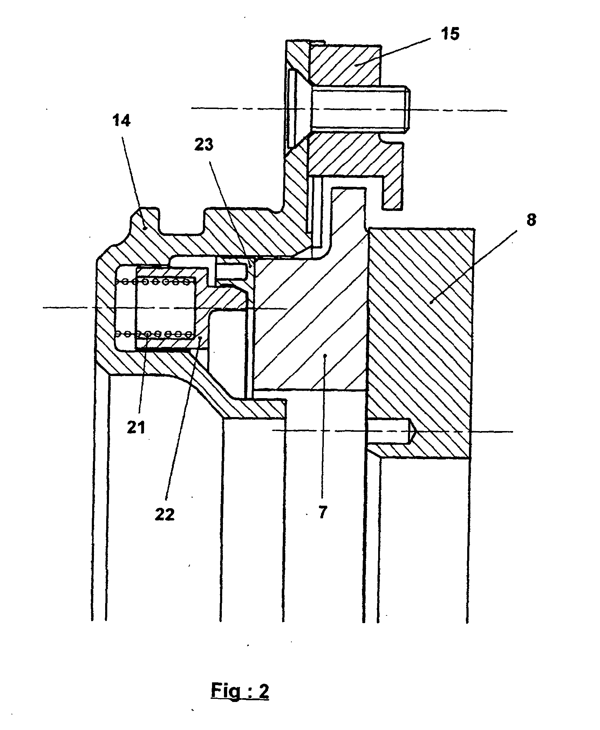

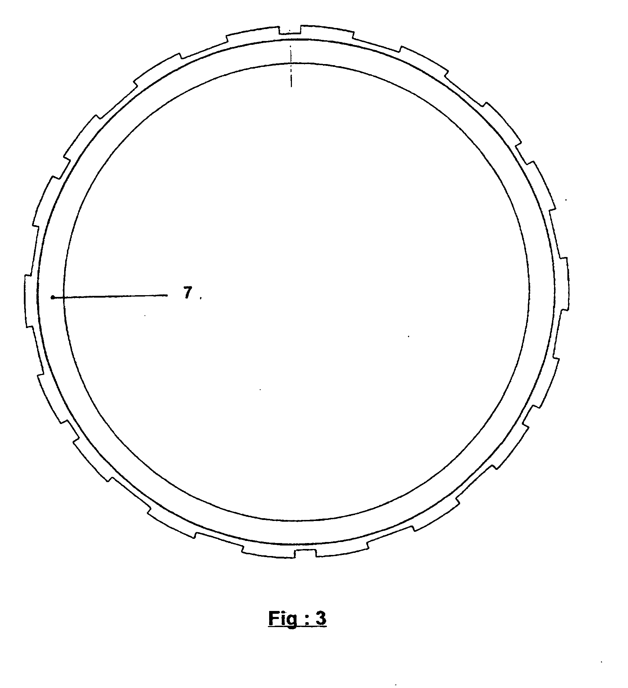

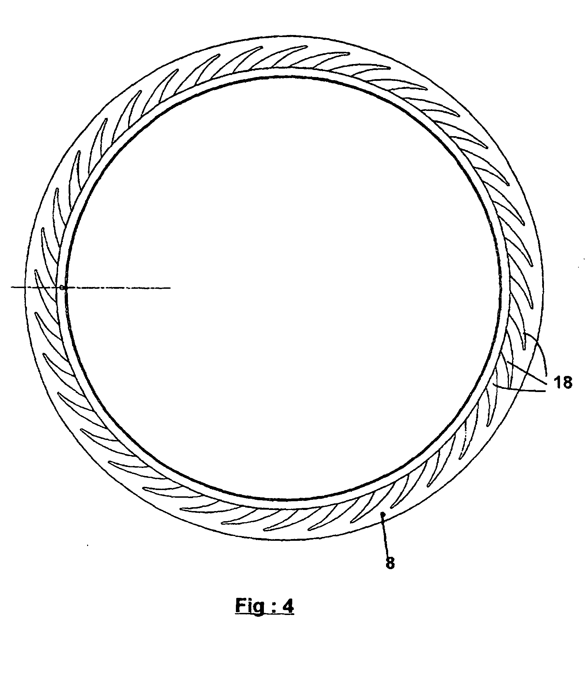

L'étanchéité principale est assurée par un joint composé d'un anneau statique de carbone 7 associé à un anneau tournant 8 et dont les détails de réalisation sont représentés sur les figures 2, 3 et 4.

L'anneau tournant 8 est centré sans serrage sur le manchon 4 au moyen d'un joint torique 9. L'entraînement de l'anneau tournant 8 par le manchon 4 est assuré au moyen de goupilles 10 logées dans un rebord 11 du manchon 4. L'anneau tournant 8 est maintenu en position axiale en appui sur le rebord 11 de manchon par un ressort plat annulaire 12 monté entre le roulement 3 et un épaulement 13 ménagé sur le manchon 4.

L'anneau de carbone 7 est maintenu dans un support annulaire fixe 14 qui l'enveloppe et un système de blocage axial 15 maintient l'anneau de carbone 7 à l'état libre dans le support 14.

L'étanchéité est réalisée entre les faces radiales coopérantes respectives 16 et 17 de l'anneau de carbone 7 et de l'anneau tournant 8. Des rainures de portance 18 sont ménagées sur la face 17 de l'anneau tournant 8 de telle sorte qu'en fonctionnement et de manière remarquable, conforme à l'invention, aucun frottement notable n'est obtenu entre les faces respectives en regard 16 et 17 de l'anneau de carbone 7 et de l'anneau tournant 8 mais un jeu minimal est maintenu, laissant une fuite minimale contrôlée d'air en surpression dans l'enceinte à air 6 vers l'enceinte à huile 5 et évita t toute remontée d'huile de l'enceinte 5 du roulement vers l'enceinte à air 6. Une cale 18 de réglage associée à des vis 19 et disposée entre le support 14 de l'anneau de carbone 7 et un élément 20 de carter assure la position axiale de l'anneau de carbone 7 par rapport à l'anneau tournant 8. En outre, à l'intérieur du support 14 sont disposés des ressorts axiaux 21 maintenus par un anneau 22 qui assure une charge axiale sur l'anneau de carbone 7 de manière à éviter toute fuite à l'état libre. Dans l'exemple de réalisation représenté sur les figures 1 et 2, un joint secondaire 23 en F retourné est interposé entre l'anneau 22 et l'anneau de carbone 7.

Un couvercle 24 fixe la partie statique du dispositif de joint d'étanchéité sur le carter de turbomachine. Sur le couvercle 24 sont fixées les conduites de pressurisation en air dont la liaison est représentée en 25 et de récupération d'huile dont le départ est représenté en 26. Le couvercle 24 porte également la partie statique d'un joint à labyrinthe 27 ménagé sur le manchon 4 dans l'enceinte à air et qui évite toute entrée de poussières qui pourraient atteindre l'interface entre l'anneau de carbone 7 et l'anneau tournant 8 et nuire ainsi à l'étanchéité.

Les dispositions détaillées de l'invention qui viennent d'être décrites permettent d'assurer les résultats avantageux précédemment relevés et les essais réalisés en fonctionnement ont montré une pleine efficacité de l'étanchéité obtenue et une parfaite intégrité des éléments du dispositif. Les observations effectuées ont notamment confirmé la très faible consommation d'huile au niveau des déshuileurs, la très faible fuite d'air et l'absence de fuite d'huile ainsi que l'absence d'usure à l'interface de l'anneau de carbone 7. Ces résultats avantageux sont attribués notamment aux dispositions avantageuses de l'invention :
- équilibre des pressions obtenu autour de l'anneau de carbone 7,
- le niveau très faible des frottements exercés sur l'anneau de carbone 7,
- l'absence de déformation de l'anneau tournant 8,
- le jeu de fuite parfaitement calibré à l'interface entre l'anneau de carbone 7 et le joint tournant 8 de manière à éviter les frottements tout en assurant la fuite d'air minimale nécessaire,
- la création d'un film d'air en surpression locale entre l'anneau de carbone 7 et l'anneau tournant 8,
- le couplage avantageux assuré entre les aménagements de système de pressurisation en air, de récupération d'huile, la mise en place d'un joint à labyrinthe complémentaire et les modalités particulières de montage et de réglage de l'anneau de carbone et de l'anneau tournant forment le joint d'étanchéité.

## Revendications

1. Dispositif comprenant un arbre (1) d'une turbomachine, un manchon (4) solidaire de cet arbre (1), un carter (2) prolongé par un élément de carter (20) et complété par un couvercle (24), ainsi qu'un palier comportant un roulement (3) monté entre le manchon (4) et le carter (2), et un joint d'étanchéité séparant une enceinte à huile (5) du roulement (3) et une enceinte à air (6) de la turbomachine, **caractérisé en ce qu'**il comprend un joint à labyrinthe (27) monté sur la partie de manchon (4) située du côté de l'enceinte à air (6) et, en série, un anneau statique de carbone (7) ne présentant pas de contact avec l'arbre (1) et bloqué axialement sur un support annulaire fixe (14), ledit anneau de carbone (7) ayant une face latérale (16) coopérant avec un anneau tournant (8) entraîné par le manchon (4) au moyen de goupilles (10) portées par le manchon (4), centré sans serrage sur le manchon (4) au moyen d'un joint torique (9) et maintenu dans le sens axial par un ressort plat annulaire (12), la face latérale (17) dudit anneau tournant (8) coopérant avec l'anneau de carbone (7) comportant des rainures de portance (18) de manière à assurer une étanchéité en fonctionnement sans frottement entre lesdites faces latérales (16, 17).

2. Dispositif selon la revendication 1 **caractérisé en ce que** un système de blocage axial (15) maintient l'anneau de carbone (7) à l'état libre dans le support (14).

3. Dispositif selon l'une des revendications 1 ou 2 **caractérisé en ce que** une cale de réglage (18) associée à des vis (19), disposée entre le support (14) et l'élément de carter (20) assure la position axiale de l'anneau de carbone (7) par rapport à l'anneau tournant (8).

4. Dispositif selon l'une quelconque des revendications 1 à 3 **caractérisé en ce que** des ressorts axiaux (21) disposés à l'intérieur du support (14) et maintenues par un anneau (22) assurent une charge axiale sur l'anneau de carbone (7), un joint secondaire (23) étant interposé entre l'anneau (22) et l'anneau de carbone (7).

5. Dispositif selon l'une quelconque des revendications 1 à 4 **caractérisé en ce que** des conduites de pressurisation en air (25) et des conduites de récupération d'huile (26) sont fixées sur le couvercle (24).

## Claims

1. Device comprising a shaft (1) of a turbomachine, a sleeve (4) integral with this shaft (1), a housing (2) prolonged by a housing element (20) and completed by a cover (24), and a bearing comprising a rolling bearing (3) mounted between the sleeve (4) and the housing (2), and a gasket separating an oil chamber (5) of the rolling bearing (3) and an air chamber (6) of the turbomachine, **characterized in that** it comprises a labyrinth gasket (27) mounted on that part of the sleeve (4) which is located on the same side as the air chamber (6), and, in series, a static carbon ring (7) having no contact with the shaft (1) and blocked axially on a fixed annular support (14), the said carbon ring (7) having a lateral face (16) cooperating with a rotating ring (8) which is driven by the sleeve (4) by means of pins (10) carried by the sleeve (4) and is centred without clamping on the sleeve (4) by means of an O-ring (9) and which is held in the axial direction by a flat annular spring (12), the lateral face (17) of the said rotating ring (8) cooperating with the carbon ring (7) comprising lifting grooves (18) so as to ensure sealing-off during operation, without friction between the said lateral faces (16, 17).

2. Device according to Claim 1, **characterized in that** an axial blocking system (15) keeps the carbon ring (7) in the free state in the support (14).

3. Device according to one of Claims 1 or 2, **characterized in that** an adjusting wedge (18) associated with screws (19) and arranged between the support (14) and the housing element (20) ensures the axial position of the carbon ring (7) in relation to the rotating ring (8).

4. Device according to any one of Claims 1 to 3, **characterized in that** axial springs (21) arranged within the support (14) and held by a ring (22) ensure an axial load on the carbon ring (7), a secondary gasket (23) being interposed between the ring (22) and the carbon ring (7).

5. Device according to any one of Claims 1 to 4, **characterized in that** air pressurization pipes (25) and oil recovery pipes (26) are fastened to the cover (24).

## Patentansprüche

1. Vorrichtung mit einer Welle (1) einer Turbomaschine, mit einer mit dieser Welle (1) fest verbundenen Muffe (4), mit einem Gehäuse (2), das durch ein Gehäuseelement (22) verlängert und durch einen Deckel (24) ergänzt wird, sowie mit einem Lager, das aus einem Wälzlager (3) besteht, das zwischen der Muffe (4) und dem Gehäuse (2) angebracht ist, und mit einer Dichtung, die einen Öl enthaltenden Raum (5) des Wälzlagers (3) und einen Luft enthaltenden Raum (6) der Turbomaschine voneinander trennt,
**dadurch gekennzeichnet,**
**dass** sie eine Labyrinthdichtung (27), die auf dem Teil der mit der Welle fest verbundenen Muffe (4) sitzt, der auf der Seite zu dem Luft enthaltenden Raum (6) hin gelegen ist, sowie dahinter einen statischen Kohlenstoffring (7), der keinen Kontakt mit der Welle (1) aufweist und axial auf einer feststehenden, ringförmigen Halterung (14) blockiert ist, umfasst, wobei dieser Kohlenstoffring (7) mit einer Seitenfläche (16) mit einem drehenden Ring (8) zusammenwirkt, der von der Muffe (4) mittels an der Muffe (4) sitzenden Mitnehmerstiften (10) gedreht wird, mittels einer O-Ringdichtung (9) ohne feste Verbindung auf der Muffe (4) zentriert ist und in axialer Richtung durch eine flache, ringförmige Feder (12) gehalten wird, wobei die Seitenfläche(17) dieses mit dem Kohlenstoffring (7) zusammenwirkenden drehenden Rings (8) Treibrillen (18) dergestalt aufweist, dass in Betrieb zwischen diesen Seitenflächen (16, 17) eine Dichtigkeit ohne Reibung gewährleistet ist.

2. Vorrichtung nach Anspruch 1,
**dadurch gekennzeichnet,**
**dass** ein Sperrsystem (15) den KohlenstofFring (7) frei in der Halterung (14) hält.

3. Vorrichtung nach Anspruch 1 oder 2,
**dadurch gekennzeichnet,**
**dass** ein Einstellblock (18) in Verbindung mit Schrauben (19), der zwischen der Halterung (14) und dem Gehäuseelement (20) angeordnet ist, die axiale Position des Kohlenstoffrings (7) gegenüber dem drehenden Ring (8) gewährleistet.

4. Vorrichtung nach einem der Ansprüche 1 bis 3,
**dadurch gekennzeichnet,**
**dass** axiale Federn (21), die im Inneren der Halterung (14) angeordnet sind und durch einen Ring (22) festgehalten werden, den Kohlenstoffring (7) axial belasten, wobei zwischen dem Ring (22) und dem Kohlenstoffring (7) eine Nebendichtung (23) angeordnet ist.

5. Vorrichtung nach einem der Ansprüche 1 bis 4,
**dadurch gekennzeichnet,**
**dass** Luftdruckleitungen (25) und Ölauffangleitungen (26) auf dem Deckel befestigt sind.
